**Europäisches Patentamt**

**European Patent Office**

**Office européen des brevets**

(19)

(11) Veröffentlichungsnummer: **0 056 584**
**B1**

(12) **EUROPÄISCHE PATENTSCHRIFT**

(45) Veröffentlichungstag der Patentschrift:
19.09.84

(51) Int. Cl.³: **B 01 D 53/36, F 01 N 3/10**

(21) Anmeldenummer: **82100061.9**

(22) Anmeldetag: **07.01.82**

(54) **Bifunktionaler Filter zur Behandlung von Abgasen.**

(30) Priorität: **15.01.81 DE 3101026**

(43) Veröffentlichungstag der Anmeldung:
**28.07.82 Patentblatt 82/30**

(45) Bekanntmachung des Hinweises auf die Patenterteilung:
**19.09.84 Patentblatt 84/38**

(84) Benannte Vertragsstaaten:
**CH DE FR GB IT LI SE**

(56) Entgegenhaltungen:
EP - A - 0 036 321
EP - A - 0 042 302
EP - A - 0 043 694
DE - A - 2 539 964
DE - A - 2 951 316
DE - C - 750 701
DE - C - 884 904
FR - C - 1 515 158

(73) Patentinhaber: **Engelhard Kali-Chemie Autocat GmbH,
Postfach 220 Hans-Böckler-Allee 20,
D-3000 Hannover 1 (DE)**

(72) Erfinder: **Wolsing, Wilhelm, Dipl.-Ing., Wegsfeld 42,
D-3000 Hannover 91 (DE)**

(74) Vertreter: **Lauer, Dieter, Dr., c/o Kali-Chemie
Aktiengesellschaft Postfach 220,
D-3000 Hannover 1 (DE)**

## Beschreibung

Die Erfindung betrifft einen bifunktionalen Filter zur Behandlung von Abgasen, insbesondere dieselmotorischen Abgasen, durch Reinigung der Abgase von Feststoffpartikeln durch Filtration und von gasförmigen Schadstoffen durch katalytische Behandlung.

Gattungsähnliche Filter sind bekannt aus EP-A1-0 036 321 (Anmeldetag: 16. 03. 81; Priorität: 15. 03. 80 JP 33 202/80; Veröffentlichungstag: 23. 09. 81) und EP-A1-0 043 694 (Anmeldetag: 01. 07. 81; Priorität: 03. 07. 80 US 165 391, 165 611, 165 646 und 165 647, Veröffentlichungstag: 13. 01. 82).

Die Absenkung von Partikelemissionen bei Verbrennungsprozessen kann den Einsatz sogenannter Partikelfilter erfordern, die die im Abgasstrom vorhandenen Festpartikel herausfiltern, die im wesentlichen aus Ruß bestehen. Gleichzeitig kann durch einen auf den Filter aufgebrachten Katalysator eine katalytische Nachbehandlung von gasförmigen Schadstoffen, wie z. B. Kohlenwasserstoffe, Kohlenmonoxid, Schwefelverbindungen, Stickstoffoxide bewirkt werden.

So werden unbeschichtete Filter oder auch mit katalytisch aktivem Material beschichtete Filter im Abgasstrom von Verbrennungsprozessen, insbesondere im Abgasstrom von Dieselmotoren, zur Absenkung der Partikel- und Schadstoffemission eingesetzt.

Die bisher verwendeten Katalysator-freien keramischen Filtersysteme haben den Nachteil, nur die Partikelemission zu begrenzen.

Wird, wie aus der FR-C-1 515 158 bekannt ist, ein Katalysator enthaltender Filter verwendet, so wird durch Reaktion von im Abgas enthaltenen Schwefeloxiden am Katalysator zusätzlich die Bildung von Sulfatpartikeln bewirkt. Diese werden zusammen mit den abzuscheidenden, im wesentlichen aus Ruß bestehenden Feststoffpartikeln aus dem Filter abgeschieden. Mit zunehmender Abscheidung der Feststoffpartikel steigen Druck und Temperatur im Filter an, bis die Zündtemperatur der Rußpartikel erreicht wird und der Filter durch Abbrennen regeneriert wird. Eine vollständige Regeneration kann aber nicht erreicht werden, da die mitabgeschiedenen Sulfatteilchen nicht durch Abbrennen entfernt werden. Je nach Schwefelgehalt der Abgase kommt es somit zu einer mehr oder weniger schnellen Verstopfung der Filterporen durch Sulfatpartikel und damit zur Unbrauchbarkeit des Filters.

Aus der EP-A1-0 020 766 ist eine Anordnung bekannt, bei der dieselmotorisches Abgas durch Filtration und nachgeschaltete katalytische Stufe behandelt wird. Dazu ist ein schwammförmiger Katalysator spiralförmig in einen Hohlzylinder eingebracht, wobei der Hohlzylinder aus einem metallischen Filtergewebe besteht. Eine solche Anordnung weist andere gravierende Nachteile auf. So muß zur Regenerierung des Filters, der sich in dieser Ausführungsform nicht mehr selbsttätig regeneriert, zur Bestimmung des Regenerationszeitpunktes die Druckdifferenz zwischen Filterein- und -austrittsseite ständig überwacht werden und zur Regenerierung des Filters selbst muß Heißluft mittels eines zusätzlichen Brenners auf den Filter geleitet werden.

Der Erfindung liegt die Aufgabe zugrunde, die Nachteile des Standes der Technik zu beheben und insbesondere einen bifunktionalen keramischen Filter zur Verfügung zu stellen, bei dem die Verstopfung durch Sulfatpartikel vermieden werden kann und der sich selbsttätig regeneriert.

Die Lösung der Aufgabe gelingt durch einen im Hauptanspruch beschriebenen bifunktionalen Filter.

Eine besondere Ausführungsform ist dadurch gekennzeichnet, daß Ein- und Austrittsräume ein System aus einseitig geschlossenen Röhren bilden, wobei jeder Eintrittsraum mit zumindestens einem Austrittsraum gasdurchlässig verbunden ist. Vorteilhaft ist dabei, wenn die Längsachsen der Röhren im wesentlichen parallel zueinander verlaufen. Besonders hohe Abgasdurchsätze können erreicht werden, wenn die Ein- und Austrittsräume benachbart angeordnet sind und die gasdurchlässigen Trennwände von den Röhren gemeinsamen Mantelflächen gebildet werden.

Die katalytische Behandlung kann mit allen bekannten, zur Abgasbehandlung verwendbaren Katalysatoren erfolgen. Gemäß der Ausführung des Erfindungsgegenstandes findet diese Behandlung nach der Filtrationsstufe statt. Dazu ist der Katalysator als Beschichtung auf der dem Austrittsraum zugewandten Seite der gasdurchlässigen Trennwand aufgebracht. Dabei umfaßt der Begriff »Aufbringen« übliche technische Verfahren, wie z. B. Beschichten mit dem Katalysator oder katalysatorhaltigen Massen, Imprägnieren der Oberflächenschichten der Trennwand usw.

Ein Ausführungsbeispiel der Erfindung ist in den Zeichnungen schematisch dargestellt. Es zeigt

Fig. 1 eine Draufsicht auf die Einlaßseite des erfindungsgemäßen Filters und

Fig. 2 einen Längsschnitt durch den erfindungsgemäßen Filter,

Fig. 3 den in Fig. 2 mit III bezeichneten Ausschnitt.

Wie in den Zeichnungen zu erkennen, wird der Filter aus einer Vielzahl von im wesentlichen parallel zueinander verlaufenden Röhren 1 gebildet, die im wesentlichen quadratischen Querschnitt aufweisen. Trennwände 2 zwischen den Röhren 1 werden — abgesehen vom äußeren Randbereich — durch benachbarten Röhren 1 gemeinsame Mantelflächen aus gasdurchlässigem, jedoch partikelundurchlässigem keramischen Material gebildet. Derartige Körper sind auf dem Gebiet der Katalyse unter dem Begriff monolithische Katalysatorkörper bekannt.

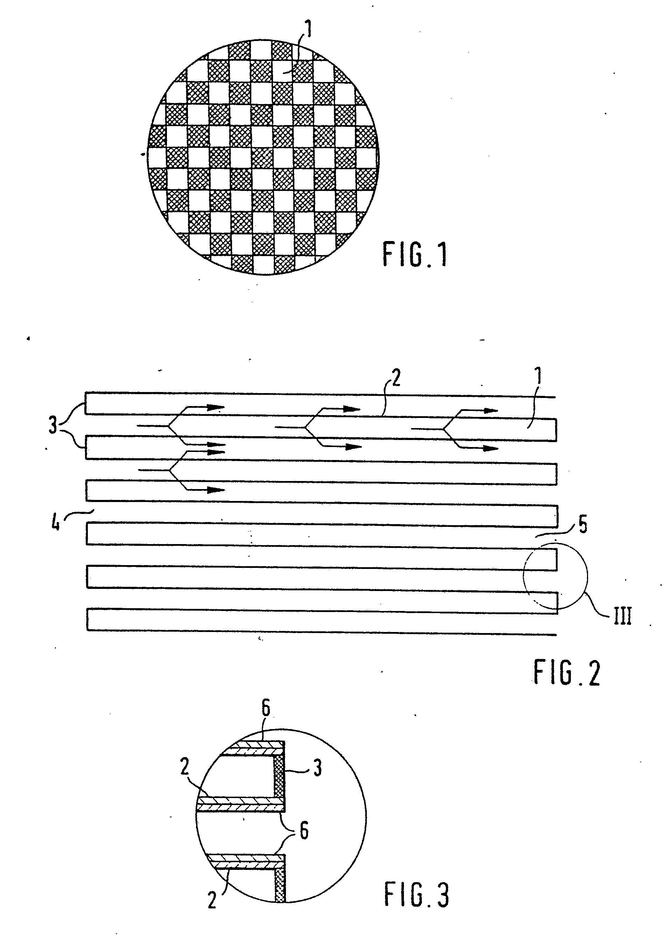

Jede Röhre 1 ist an einem Ende durch einen gasundurchlässigen Keramikpfropfen 3 verschlossen, wobei im Fall des dargestellten Filters mit quadratischem Röhrenquerschnitt jeweils benachbarte Röhren an ihren gegenüberliegenden Enden verschlossen sind. Die Draufsicht auf die Ein- (bzw. Auslaß-)Seite des Filters zeigt dann das in Fig. 1 erkennbare Schachbrett-Muster.

Falls anstelle des dargestellten Körpers mit quadratischem Röhrenquerschnitt solche mit 6eckigem oder rundem Röhrenquerschnitt, die ebenfalls bekannt sind, verwendet werden, werden benachbarte Röhrenschichten an ihren gegenüberliegenden Enden verschlossen.

Durch das Verschließen der Röhren 1 an ihren gegenüberliegenden Enden entstehen Eintrittsräume 4 und Austrittsräume 5, die miteinander über die Mantelflächen 2 in gasdurchlässiger, aber partikelundurchlässiger Verbindung stehen.

Wie in dem Ausschnitt III bzw. in Fig. 3 angedeutet ist, ist auf die den Austrittsräumen 5 zugewandte Mantelfläche der Röhren 1 eine katalytisch aktive Beschichtung 6 aufgebracht.

Das Abgas nimmt beim Durchströmen des Filters den durch die Pfeile angedeuteten Weg und wird an den Trennwänden 2 zunächst durch Filtration von Partikeln befreit und nach Durchströmen der Trennwände in der katalytisch aktiven Beschichtung 6 katalytisch behandelt.

## Patentansprüche

1. Bifunktionaler Filter zur Behandlung von Abgasen, insbesondere dieselmotorischen Abgasen, durch Reinigung der Abgase von Feststoffpartikeln durch Filtration und von gasförmigen Schadstoffen durch katalytische Behandlung, umfassend Ein- und Austrittsräume (4, 5) für die Abgase mit die Räume (4, 5) voneinander trennenden, aus keramischem Material bestehenden, gasdurchlässigen, aber partikelundurchlässigen Wänden (2), dadurch gekennzeichnet, daß nur die den Austrittsräumen (5) zugewandten Seiten der Wände (2) mit katalytisch aktivem Material (6) beschichtet sind.

2. Filter nach Anspruch 1, dadurch gekennzeichnet, daß Ein- und Austrittsräume (4, 5) ein System aus einseitig geschlossenen Röhren (1) bilden, wobei jeder Eintrittsraum (4) mit zumindestens einem Austrittsraum (5) gasdurchlässig verbunden ist.

3. Filter nach Anspruch 2, dadurch gekennzeichnet, daß Ein- und Austrittsräume (4, 5) benachbart angeordnet und über gemeinsame, gasdurchlässige Röhrenmantelflächen, die die partikelundurchlässigen Wände (2) darstellen, verbunden sind.

4. Filter nach Anspruch 2 oder 3, dadurch gekennzeichnet, daß die Längsachsen der Röhren (1) im wesentlichen parallel zueinander verlaufen.

5. Filter nach einem der Ansprüche 2 bis 4, dadurch gekennzeichnet, daß die den Austrittsraum (5) bildenden Röhren (1) auf der vom Abgas zuerst angeströmten Seite verschlossen sind, die den Eintrittsraum (4) bildenden Röhren dagegen auf der entgegengesetzten Seite.

6. Verfahren zur Behandlung von Abgasen, insbesondere dieselmotorischen Abgasen, dadurch gekennzeichnet, daß man einen bifunktionalen Filter gemäß einem der Ansprüche 1 bis 5 verwendet.

## Claims

1. Bifunctional filter for the treatment of exhaust gases, in particular exhaust gases from diesel engines, by purifying the exhaust gases of solid particles by filtration and of gaseous harmful substances by catalytic treatment, comprising inlet and outlet chambers (4, 5) for the exhaust gases with the chambers (4, 5) separated from each other by walls (2) which consist of ceramic material and are permeable to gas but impermeable to particles, characterized in that only the sides of the walls (2) facing the outlet chambers (5) are coated with catalytically active material (6).

2. Filter according to claim 1, characterized in that inlet and outlet chambers (4, 5) form a system of pipes (1) which are closed on one side, each inlet chamber (4) being connected with at least one outlet chamber (5) in a gas-permeable manner.

3. Filter according to claim 2, characterized in that inlet and outlet chambers (4, 5) are arranged adjacent to each other and are connected via common, gas-permeable pipe surfaces, which constitute the walls (2) which are impermeable to particles.

4. Filter according to claim 2 or 3, characterized in that the longitudinal axes of the pipes (1) run substantially parallel to each other.

5. Filter according to one of claims 2 to 4, characterized in that the pipes (1) forming the outlet chamber (5) are closed on the side against which the exhaust gas first flows, but the pipes forming the inlet chamber (4) are closed on the opposite side.

6. Method for the treatment of exhaust gases, in particular exhaust gases from diesel engines, characterized in that a bifunctional filter according to one of claims 1 to 5 is used.

## Revendications

1. Filtre bifonctionnel pour le traitement de gaz d'échappement, en particulier pour épurer les gaz d'échappement d'un moteur Diesel, en débarrassant les gaz d'échappement de leurs particules solides par filtration, et en les débarrassant de leurs composants gazeux nocifs par un traitement catalytique; ce filtre comportant pour les gaz d'échappement des chambres d'entrée et de sortie (4, 5) et des parois (2) en matière céramique perméable aux gaz mais imperméable aux particules, qui séparent l'une de l'autre les chambres d'entrée et de sortie (4, 5); caractérisé en ce qu'il comporte une couche de substance catalytique active (6) appliquée seulement sur les faces de la paroi (2) disposées en regard des chambres de sortie (5).

2. Filtre selon la revendication 1, caractérisé en ce que les chambres d'entrée et de sortie (4, 5) constituent un système de tubes (1) obturés chacun à une extrémité, chaque chambre d'entrée (4) communiquant avec au moins une chambre de sortie (5) d'une manière perméable aux gaz.

3. Filtre selon la revendication 2, caractérisé en ce que les chambres d'entrée et de sortie (4, 5) sont disposées au voisinage les unes des autres et communiquent entre elles par des parois tubulaires contiguës, qui constituent la paroi (2) perméable aux gaz.

4. Filtre selon l'une des revendications 2 ou 3, caractérisé en ce que les axes longitudinaux des tubes (1) sont sensiblement parallèles entre eux.

5. Filtre selon l'une des revendications 2 à 4, caractérisé en ce que chacun des tubes (1) constituant une chambre de sortie (5) est obturé à l'endroit de son extrémité disposée du côté de l'arrivée des gaz d'échappement, chaque tube (1) constituant une chambre d'entrée (4) étant par contre obturé à l'endroit de son extrémité opposée.

6. Procédé de traitement de gaz d'échappement, en particulier pour les gaz d'échappement d'un moteur Diesel, caractérisé en ce qu'on utilise un filtre bifonctionnel selon l'une des revendications 1 à 5.

FIG.1

FIG.2

FIG.3